# EUROPÄISCHE PATENTSCHRIFT

(11) **EP 0 815 475 B1**
(45) Veröffentlichungstag und Bekanntmachung des Hinweises auf die Patenterteilung: **12.09.2001**
(21) Anmeldenummer: 96905688.6
(22) Anmeldetag: 07.03.1996
(51) Int. Cl.: G01V 15/00

(54) **VERFAHREN UND VORRICHTUNG ZUR HERSTELLUNG EINER TRANSPONDEREINHEIT SOWIE TRANSPONDEREINHEIT**
PROCESS AND DEVICE FOR PRODUCING A TRANSPONDER UNIT AND TRANSPONDER UNIT THUS PRODUCED
PROCEDE ET DISPOSITIF PERMETTANT DE PRODUIRE UN SYSTEME REPONDEUR ET SYSTEME REPONDEUR

(30) Priorität: 22.03.1995 DE 19509999
(43) Veröffentlichungstag der Anmeldung: 07.01.1998
(73) Patentinhaber: Finn, David, 87629 Füssen-Weissensee (DE); Rietzler, Manfred, 87616 Marktoberdorf (DE)
(72) Erfinder: Finn, David, 87629 Füssen-Weissensee (DE); Rietzler, Manfred, 87616 Marktoberdorf (DE)
(74) Vertreter: Böck, Bernhard, Dipl.-Ing.
(86) Internationale Anmeldenummer: DE9600400
(87) Internationale Veröffentlichungsnummer: WO9629618

(56) Entgegenhaltungen:
- DE-A- 4 307 080
- NL-A- 8 503 166
- US-A- 5 025 550
- US-A- 5 050 292

## Beschreibung

Die vorliegende Erfindung betrifft ein Verfahren und eine Vorrichtung zur Herstellung einer Transpondereinheit mit einer Wickelspule und mindestens einem elektronischen Bauelement, wie ein Chip oder dergleichen, gemäß den Ansprüchen 1 bzw. 13. Des weiteren betrifft die Erfindung eine Transpondereinheit nach dem Oberbegriff des Anspruchs 21.

Aus der US-PS 5,281,855 ist eine in ein Glasröhrchen einsetzbare Transpondereinheit bekannt, mit einer auf einem Wicklungsträger angeordneten Wickelspule, deren Wickeldrahtenden mit den Anschlußflächen eines Chips verbunden sind. Der Chip ist auf einem Substrat angeordnet, das seinerseits mit der Stirnfläche des Wicklungsträgers verklebt ist.

Aus der WO 92/15105 A1 ist ein Verfahren zur Herstellung einer Transpondereinheit mit einer Wickelspule und einem Chip bekannt, wobei das Bauelement unmittelbar mit der Wickelspule verbunden ist, mit mehreren Verfahrensstufen, in denen eine Bestückung eines Wickelwerkzeugs mit dem Bauelement, ein Wickeln der Wickelspule im Wickelwerkzeug und eine Verbindung von Wickeldrahtenden der Wickelspule mit Anschlußflächen des Bauelements im Wickelwerkzeug erfolgt. Bei dem bekannten Verfahren wird die Spulenwicklung in sogenannten "Flyer-Verfahren" durchgeführt, bei dem ein Wickelkopf um die stillstehende Wickelspule rotiert.

Aus der US-A-5 025 550 ist ebenfalls ein Verfahren bekannt, bei dem die Spulenwicklung mittels eines um den stillstehenden Wicklungsträger rotierenden "Flyer" erfolgt. Ein ähnliches Verfahren zeigt auch die NL-A-8 503 166. Weitere Verfahren zur Herstellung von Transpondern sind aus der US-A-5 050 292 und der DE 43 07 080 bekannt.

Der vorliegenden Erfindung liegt die Aufgabe zugrunde, ein Verfahren sowie eine Vorrichtung vorzuschlagen, die die Herstellung einer Transpondereinheit vereinfacht. Des weiteren liegt der Erfindung die Aufgabe zugrunde, eine Transpondereinheit mit einer Gestaltung vorzuschlagen, die eine Herstellung der Transpondereinheit vereinfacht.

Das erfindungsgemäße Verfahren zur Herstellung einer Transpondereinheit mit einer Wickelspule und mindestens einem elektronischen Bauelement, wie ein Chip oder dergleichen, wobei das Bauelement unmittelbar oder über ein Substrat mit der Wickelspule verbunden ist, weist mehrere Verfahrensphasen auf, in denen eine Bestückung eines Wickelwerkzeugs mit dem Bauelement bzw. dem Substrat, ein Wickeln der Wickelspule im Wickelwerkzeug und eine Verbindung von Drahtenden der Wickelspule mit Anschlußflächen des Bauelements bzw. des Substrats im Wickelwerkzeug erfolgt, derart, daß das Wickelwerkzeug in sämtlichen der genannten Verfahrensphasen als Arbeitsplattform dient.

Bei dem erfindungsgemäßen Verfahren findet demnach sowohl die Herstellung der Wickelspule als auch deren nachfolgende Verbindung mit den Anschlußflächen des Bauelements bzw des Substrats im Wickelwerkzeug statt. Somit wird die Relativposition der miteinander die Transpondereinheit bildenden Bauteile während des gesamten Herstellungsverfahrens beibehalten. Ein Überführen der Wickelspule zum Bauelement oder Substrat zur Herstellung der Verbindung und die durch die Überführung notwendig werdende erneute Positionierung ist demnach beim erfindungsgemäßen Verfahren überflüssig. Hierdurch wird die Herstellung einer Transpondereinheit wesentlich vereinfacht.

Als besonders vorteilhaft erweist es sich, wenn zur Herstellung von Transpondereinheiten das Wickelwerkzeug getaktet in den einzelnen Verfahrensphasen zugeordnete Arbeitspositionen bewegt wird. Hierdurch wird es möglich, den einzelnen Verfahrensphasen zugeordnete Funktionseinheiten, wie eine Bestückungseinrichtung und eine Verbindungseinrichtung längs des Taktweges des Wickelwerkzeugs fest zu installieren.

Wenn die Bestückung des Wickelwerkzeugs mit dem Bauelement oder dem Substrat vor dem Wickeln der Wickelspule erfolgt, können beim Wickelvorgang die Wickeldrahtenden über die Anschlußflächen des Bauelements oder des Substrats hinweggeführt werden, so daß sich diese von vornherein in Verbindungsposition befinden.

Alternativ besteht auch die Möglichkeit, das Wickeln der Wickelspule vor der Bestückung des Wickelwerkzeugs mit dem Bauelement oder dem Substrat durchzuführen, falls die besondere Ausbildung der Wickelspulenform dies erforderlich machen sollte.

Wenn sich das Wickelwerkzeug auf einer Kreisbahn in die einzelnen Arbeitspositionen bewegt und längs der Kreisbahn angeordnete, den einzelnen Verfahrensphasen zugeordnete Funktionseinheiten zur Durchführung der Verfahrensphasen translatorisch auf das Wickelwerkzeug zubewegt werden, wird eine in der Leistung besonders effektive und raumsparende Durchführung des Verfahrens möglich.

Als besonders vorteilhaft erweist es sich, wenn in einer Bestückungsposition eine Bestückungseinrichtung mit einer Zuführeinrichtung kombiniert wird, derart, daß der Zuführeinrichtung ein Bauelement oder Substrat entnommen und am Wickelwerkzeug plaziert wird. Hierdurch wird eine kontinuierliche Zuführung, beispielsweise auf einem translatorisch getakteten, bandförmigen Bauelement-oder Substratträger, möglich.

Wenn das Substrat in der Zuführeinrichtung auf einem kontinuierlich ausgebildeten Substratträger einer als Bestückungseinrichtung dienenden Pick-and-Place-Einrichtung zugeführt und dem Substratträger beispielsweise in einem Stanzvorgang entnommen wird, kann das Substrat unmittelbar aus dem Material des Substratträgers hergestellt sein, so daß beispielsweise filmartig ausgebildete Substratträger verwendet werden können, die zum einen extrem dünn ausgebildet sein können und zum anderen bei Ausbildung einer Vorschubperforation besonders einfach mit einem Traktionsantrieb kombinierbar sind.

Wenn zur Durchführung des Wickelvorgangs in einer Wickelposition ein mit einer Wickelspindel verbundener Wicklungsträger derart in das Wickelwerkzeug eingesetzt wird, daß eine Verbindung zwischen dem Wicklungsträger und dem Bauelement oder dem Substrat erfolgt, wird die für die nachfolgenden Verfahrensphasen erforderliche relative Positionierung von Bauelement bzw. Substrat und Wicklungsträger automatisch beim Einsetzen des Wicklungsträgers in das Wickelwerkzeug geschaffen.

Besonders vorteilhaft ist es, wenn die Verbindung zwischen dem Wicklungsträger und dem Substrat über einen Klemmeingriff erfolgt. Dabei kann der Klemmeingriff entweder die endgültige Verbindung zwischen dem Wicklungsträger und dem Substrat oder eine Vorfixierung bilden. Die Vorfixierung kann über eine Klebung gesichert werden.

Wenn die Drehmomentübertragung von der Wickelspindel auf das Wickelwerkzeug über den Wicklungsträger erfolgt, kann auf eine gesonderte Kraftübertragung zwischen der das Wickelmoment liefernden Wickelspindel und dem Wickelwerkzeug verzichtet werden.

Alternativ ist es auch möglich, insbesondere für den Fall, daß für den Wicklungsträger Werkstoffe verwendet werden, die nicht die für die Drehmomentübertragung notwendige Scherfestigkeit aufweisen, die Drehmomentübertragung von der Wickelspindel auf das Wickelwerkzeug über ein vom Wicklungsträger unabhängiges Kopplungselement durchzuführen.

Die erfindungsgemäße Vorrichtung zur Herstellung einer Transpondereinheit mit einer Wickelspule und mindestens einem elektronischen Bauelement, wie ein Chip oder dergleichen, wobei das Bauelement unmittelbar oder über ein Substrat mit der Wickelspule verbunden ist, weist eine Basiseinheit auf mit einem um eine zentrale Drehachse drehbaren Werkzeugträger, der mit mindestens einem Wickelwerkzeug bestückbar ist, das auf einer Kreisbahn von einer einem Wickelmodul zugeordneten Arbeitsposition (Wickelposition) in eine einem Verbindungsmodul zugeordnete Arbeitsposition (Verbindungsposition) bewegbar ist, wobei das Wickelwerkzeug in der Wickelposition als Träger einer Wickelmatrize und in der Verbindungsposition als Arbeitsplattform zur Herstellung der elektrisch leitfähigen Verbindung zwischen dem vom Wickelwerkzeug aufgenommenen Bauelement und der Wickelspule dient.

Durch den erfindungsgemäßen Einsatz des Wickelwerkzeugs sowohl als Wickelmatrizenträger als auch als Arbeitsplattform zur Durchführung der Verbindung an den in vorgegebener Relativposition angeordneten Bauelement und Wickelspule wird die Herstellung einer Transpondereinheit wesentlich vereinfacht.

Gemäß einer bevorzugten Ausführungsform weist die Vorrichtung eine Basiseinheit mit Schnittstellen zur lösbaren Verbindung mit dem Wickelmodul und dem Verbindungsmodul auf. Hierdurch wird es möglich, ein und dieselbe Basiseinheit mit verschiedenen Modulen zu kombinieren oder auch verschiedene Basiseinheiten mit gleichen Modulen zusammenzufügen.

Wenn die Basiseinheit eine weitere Schnittstelle zur lösbaren Verbindung mit einem Bestückungsmodul aufweist, lassen sich die vorstehend genannten Vorteile auch in bezug auf das weitere Modul nutzen. Dasselbe gilt, wenn die Basiseinheit mit einer weiteren Schnittstelle zur lösbaren Verbindung mit einem Entnahmemodul versehen ist, das eine Entnahme der fertiggestellten Transpondereinheit aus der Basiseinheit ermöglicht.

Ein weiterer erheblicher Vorteil des modularen Aufbaus der Vorrichtung besteht darin, daß das Wickelmodul, das Verbindungsmodul, das Bestückungsmodul sowie das Entnahmemodul in der Reihenfolge ihrer Anordnung austauschbar sind. Hierdurch kann auf Besonderheiten des Herstellungsverfahrens, beispielsweise bedingt durch spezielle Formen der Wickelspule, Rücksicht genommen werden. So kann in einem Fall das Bestückungsmodul im Verfahrensablauf dem Wickelmodul vorgeschaltet werden; in einem anderen Fall kann das Bestückungsmodul dem Wickelmodul im Verfahrensablauf nachgeschaltet werden.

Wenn das Wickelmodul eine translatorisch verschiebbare Wickelspindel mit einer Kopplungseinrichtung zur Verbindung mit einem Wicklungsträger aufweist, ist es möglich, den Wicklungsträger in die Wickelspindel einzusetzen und zum Drehantrieb des Wickelwerkzeugs zu nutzen.

Vorteilhaft ist es auch, wenn das Bestückungsmodul eine Pick-and-Place-Einrichtung aufweist, die mit einer Substrat-bzw.
Bauelement-Zuführeinrichtung kombinierbar ist.

Wenn die Basiseinheit mit mehreren voneinander verschiedenen Wickelwerkzeugen versehen ist, ist eine kontinuierliche Fertigung von Transpondereinheiten mit unterschiedlichen Spulenformen möglich.

Die erfindungsgemäße Transpondereinheit mit einer Wickelspule und mindestens einem elektronischen Bauelement, wie ein Chip oder dergleichen, wobei das Bauelement auf einem Substrat angeordnet und das Substrat mit der Wickelspule verbunden ist, weist zur Verbindung des Substrats mit der Wickelspule eine Verbindung zwischen dem Substrat und einem Wicklungsträger der Wickelspule auf.

Die Verbindung zwischen dem Substrat und dem Wicklungsträger ermöglicht eine sich quasi selbsttätig ausbildende Positionierung des Substrats zum Wicklungsträger bei der Kombination der einzelnen Bauteile zu einer Transpondereinheit, so daß beim nachfolgenden Wickelvorgang eine Ausrichtung der Wickeldrahtenden über den Anschlußflächen zur nachfolgenden Verbindung erfolgen kann.

Wenn das Substrat in einem Verbindungsteil zur formschlüssigen Verbindung mit dem Wicklungsträger beispielsweise gabelförmig ausgebildet ist, wird eine formschlüssige Verbindung ermöglicht, ohne daß hierzu das Substrat in seiner Höhe beeinflußt wird. Es können also auch extrem dünne, filmartige Substrate verwendet werden.

Wenn das Substrat in einem Bestückungsteil doppelseitig bestückt ist, derart, daß eine isolierende Trägerschicht des Substrats, die auf einer Seite mit Leiterbahnen versehen ist, Zugriffsöffnungen aufweist, die von der Gegenseite her eine Kontaktierung der Leiterbahnen von der Rückseite ermöglichen, läßt sich die zur Verfügung stehende Substratoberfläche besonders effektiv nutzen.

Eine weitere Steigerung hinsichtlich der nutzbaren Substratoberfläche läßt sich dadurch erzielen, daß die Leiterbahnen auf ihrer Oberseite über eine Kontaktflächenkontaktierung mit einem ersten elektronischen Bauelement und auf ihrer Gegenseite über eine Drahtkontaktierung mit einem weiteren elektronischen Bauelement bestückt sind. Hierdurch wird es möglich, die elektronischen Bauelemente in einem überdeckungsbereich auf beiden Seiten des Substrats anzuordnen.

Nachfolgend wird eine bevorzugte Variante des erfindungsgemäßen Verfahrens anhand einer Ausführungsform der erfindungsgemäßen Vorrichtung sowie einer Ausführungsform der erfindungsgemäßen Transpondereinheit unter Bezugnahme auf die nachfolgenden Zeichnungen näher erläutert. Es zeigen:
- **Fig. 1**: eine in einen Glaskörper eingesetzte Transpondereinheit in Seitenansicht;
- **Fig. 2**: die in **Fig. 1** dargestellte Transpondereinheit in Draufsicht;
- **Fig. 3**: einen folienartigen Substratträger mit darin ausgebildeten Substraten;
- **Fig. 4**: eine vergrößerte Darstellung eines aus dem Substratträger entnommenen Substrats;
- **Fig. 5**: eine entsprechend **Fig. 1** ausgebildete Transpondereinheit während der Herstellung in einem Wickelwerkzeug;
- **Fig. 6**: eine Basiseinheit einer modular aufgebauten Vorrichtung zur Herstellung einer Transpondereinheit;
- **Fig. 7**: die in **Fig. 6** dargestellte durch modulare Funktionseinheiten ergänzte Vorrichtung zur Herstellung einer Transpondereinheit;
- **Fig. 8**: die durch ein Spindelantriebsmodul ergänzte Basiseinheit mit entkoppeltem Spindelantrieb;
- **Fig. 9**: die in **Fig. 8** dargestellte Vorrichtung mit angekoppeltem Spindelantrieb.

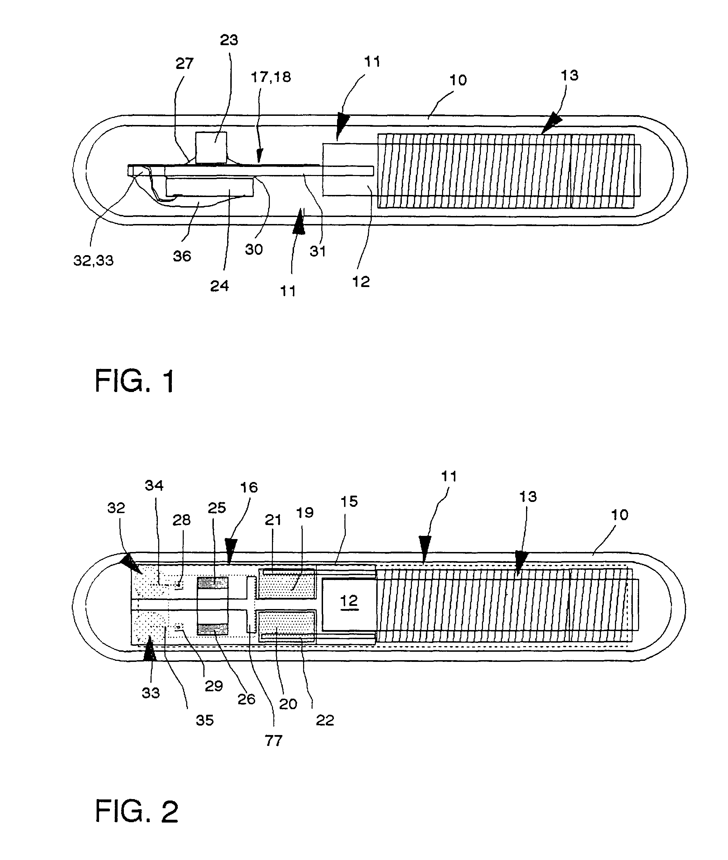

**Fig. 1** zeigt eine in einen Glaskörper 10 eingeschmolzene Transpondereinheit 11, die beispielsweise als Injektionstransponder bei der Schlachttierkennung Verwendung findet.

Die Transpondereinheit 11 weist einen bei diesem Ausführungsbeispiel als Ferritkern ausgebildeten Wicklungsträger 12 auf, auf den eine Wickelspule 13 aufgewickelt ist. Wie sich aus einer Zusammenschau der **Fig. 1** und **2** ergibt, ist ein Substrat **14** über einen Verbindungsteil 15 bei diesem Ausführungsbeispiel formschlüssig mit dem Wicklungsträger 12 verbunden.

Wie insbesondere **Fig. 2** zeigt, weist das Substrat 14 in einem Kontaktierungsteil 16 auf seiner Oberseite metallische Leitungsbahnen 17, 18 auf, die in einem Wickeldrahtkontaktbereich 19 bzw. 20 mit jeweils einem Wickeldrahtende 21 bzw. 22 der Wickelspule 13 elektrisch leitfähig verbunden sind.

Das Substrat 14 ist bei diesem Ausführungsbeispiel mit mehreren elektronischen Bauelementen bestückt, nämlich einem Kondensatorelement 23 auf der Oberseite und einem Chip 24 auf der Unterseite. Das Kondensatorelement 23 ist mit seinen Anschlußflächen 25, 26 über Flächenkontaktierung unter Zusatz eines im Löt- oder Schweißverfahren verarbeitbaren Verbindungsmittels 27 mit den Leiterbahnen 17 bzw. 18 elektrisch leitend verbunden. Um eine nachteilige gegenseitige Beeinflussung der zur Kontaktierung der Wickeldrahtenden 21, 22 und des Kondensatorelements 23 verwendeten, möglicherweise unterschiedlichen Verbindungsmaterialien zu verhindern, ist zwischen den entsprechenden Kontaktbereichen eine Flußsperre 77 vorgesehen.

Zur elektrisch leitenden Verbindung von Anschlußflächen 28, 29 des Chips 24, der über eine Kleberschicht 30 auf der den Leiterbahnen 17, 18 gegenüberliegenden Oberfläche einer isolierenden Trägerschicht 31 des Substrats 14 fixiert ist, weist die Trägerschicht 31 zwei Zugriffsöffnungen 32, 33 auf, die von der Gegenseite her einen Zugriff auf die Rückseite der Leiterbahnen 17, 18 ermöglichen. Über die Zugriffsöffnungen 32, 33 sind die Leiterbahnen 17 bzw. 18 mittels Bonddrähten 34, 35 mit den Anschlußflächen 28, 29 des Chips verbunden. Zur Abdeckung und mechanischen Stabilisierung ist der Chip zusammen mit den Bonddrähten 34, 35 mit einem Pottingverguß 36 versehen. In dem Fall, daß lediglich ein Chip mit der Wickelspule verbunden werden soll, können die Anschlußflächen des Chips unmittelbar mit den Wickeldrahtenden 21, 22 der Wickelspule 13 verbunden sein. Dabei ist dann der Chip direkt am Wicklungsträger 12 angebracht, also ohne zusätzliches Substrat 14.

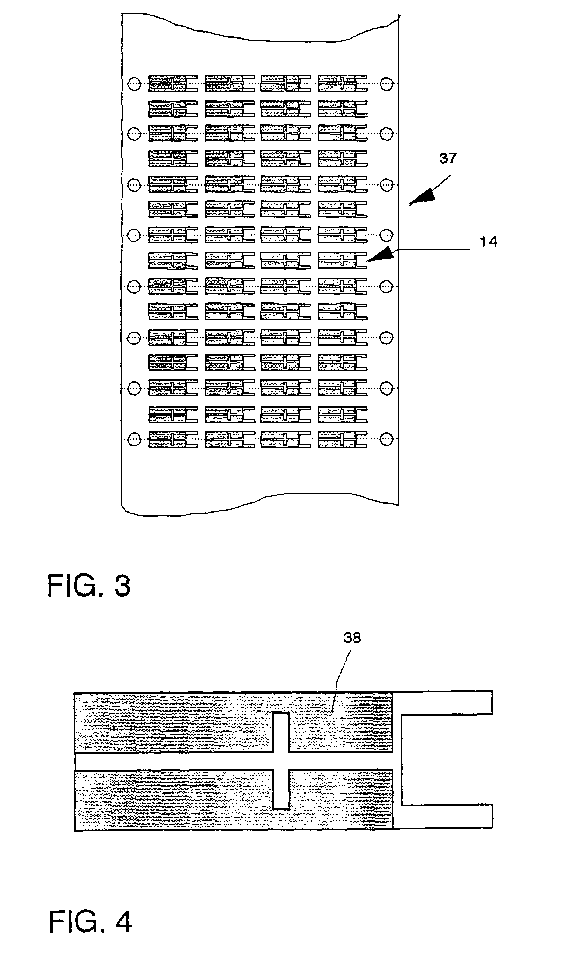

Wie **Fig. 3** zeigt, wird das mit den hier als Kondensatorelement 23 bzw. Chip 24 ausgebildeten elektronischen Bauelementen bestückte Substrat 14 in größerer Anzahl auf einem filmartig ausgebildeten Substratträger 37 zur Verfügung gestellt. Der Substratträger 37 besteht aus dem Material der Trägerschicht 31 des einzelnen Substrats 14. Zur Vereinzelung der Substrate 14 bzw. zur Entnahme des jeweiligen zur Herstellung einer Transpondereinheit 11 benötigten Substrats 14 können die Substrate 14 längs ihrer Außenkontur 38 (Fig. 4) eine Perforation aufweisen, die ein Herausdrücken der einzelnen Substrate 14 aus dem Substratträger 37 ermöglicht. Eine weitere Möglichkeit zur Vereinzelung der Substrate 14 besteht darin, diese durch einen Ausstanzvorgang aus dem Verbund mit dem Substratträger 37 zu lösen. Beide vorstehend beispielhaft genannten Vereinzelungsmaßnahmen können auch kombiniert durchgeführt werden.

Um die Zuführung des Substratträgers 37 zu einer Vereinzelungsstation zu ermöglichen, ist bei dem in Fig. 3 dargestellten Ausführungsbeispiel eine Transportperforation 39 an den Längsrändern des Substratträgers 37 vorgesehen.

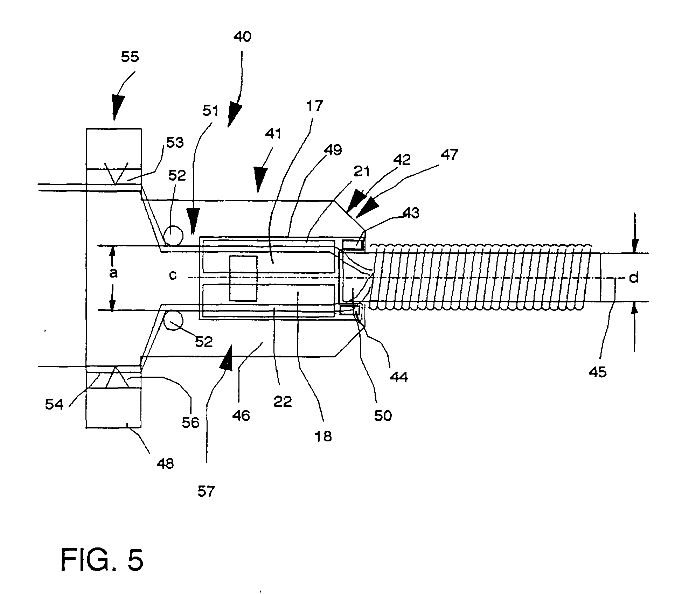

**Fig. 5** zeigt ein Wickelwerkzeug 40 zur Herstellung einer Transpondereinheit 11, deren Wickelspule 13 bei dem hier dargestellten Ausführungsbeispiel mit axial vom Wicklungsträger abgehenden Wickeldrahtenden 21, 22 versehen ist. Das Wickelwerkzeug 40 weist einen Matrizenträger 41 auf, der den hier als Wickelmatrize dienenden Wicklungsträger 12 in einer Klemmeinrichtung 42 mit zwei Klemmbacken 43, 44 aufnimmt. Zur Durchführung des Wickelvorgangs rotiert der Matrizenträger 41 zusammen mit dem Wicklungsträger 12 um eine Wickelachse 45.

Der Matrizenträger 41 ist auf einer Seite mit einer hier wickelachsenparallel ausgerichteten Abflachung 46 versehen, die sich von einer Wicklungsträgeraufnahme 47, in der sich die Klemmeinrichtung 42 befindet, bis zu einem hier als Bund ausgebildeten Umfangsrand 48 des Matrizenträgers 41 erstreckt.

In der Abflachung 46 befindet sich eine Substrataufnahme 49, die ein Einsetzen des Substrats 14 in den Matrizenträger 41 derart ermöglicht, daß bei einem Einsetzen des Wicklungsträgers 12 in die Klemmeinrichtung 42 ein Verbindungsende 50 des Wicklungsträgers 12 vom Verbindungsteil 15 des Substrats 14 umfaßt wird. Zumindest während der Herstellung des Eingriffs zwischen dem Verbindungsende 50 des Wicklungsträgers 12 und dem hier gabelförmig ausgebildeten Verbindungsteil 15 des Substrats 14 wird das Substrat 14 in der Substrataufnahme 49 fixiert. Dies kann beispielsweise durch eine Unterdruck-betätigte Ansaugvorrichtung im Matrizenträger 41 erfolgen.

Auf der Abflachung 46 ist eine Drahtumlenkeinrichtung 51 mit zwei Umlenkstiften 52 angeordnet, wobei jeweils ein Umlenkstift einem Wickeldrahtende 21 bzw. 22 zugeordnet ist und für eine von der Umfangspositionierung von hier mit Klemmstücken 53, 54 als Halteorgane versehenen Halteeinrichtungen 55, 56 unabhängige Ausrichtung der Wickeldrahtenden 21, 22 sorgt.

Die Durchführung des eigentlichen Wickelvorgangs erfolgt unter Zuhilfenahme eines hier nicht näher dargestellten, beispielsweise als Drahtführungskapillare ausgebildeten Drahtführers, der den Wickeldraht durch die erste Halteeinrichtung 55 hindurchführt, wobei der Wickeldraht durch das Klemmstück 53 darin geklemmt gehalten wird. Bei Bewegung des Drahtführers im wesentlichen längs der Wickelachse 45 spult der Wickeldraht durch den Drahtführer ab, wobei er um den ersten Umlenkstift 52, und über die Leiterbahn 17 des Substrats hinweggeführt wird bis zum Wicklungsträger 12. Der Translationsbewegung des Drahtführers wird dann eine Rotationsbewegung des Wicklungsträgers 12 durch Drehung des Matrizenträgers 41 um die Wickelachse 45 überlagert, so daß sich auf dem Wicklungsträger 12 die in Fig. 5 dargestellte Wickelspule 13 ausbildet. Nach Erreichen der erforderlichen Windungsanzahl wird die Rotationsbewegung des Matrizenträgers 41 gestoppt und der Drahtführer translatorisch über die Leiterbahn 18 des Substrats 14 hinweg und nach Umlenkung des Wickeldrahts um den zweiten Umlenkstift 52 durch die zweite Halteeinrichtung 56 hindurchgeführt. Zur Umlenkung um die Umlenkstifte 52 wird der Translationsbewegung des Drahtführers eine geringe Rotation des Wickelwerkzeugs 40 überlagert. Schließlich wird der Wickeldraht wieder durch das Klemmstück 54 geklemmt gehalten. Durch den Durchmesser d des Wicklungsträgers 12 und den Abstand a der Umlenkungstifte 52 voneinander ist in einem Überdeckungsbereich 57 zwischen den Wickeldrahtenden 21, 22 und den Leiterbahnen 17, 18 die korrekte Positionierung des Wickeldrahts zur nachfolgenden Kontaktierung in den Wickeldrahtkontaktbereichen 19 und 20 vorgegeben.

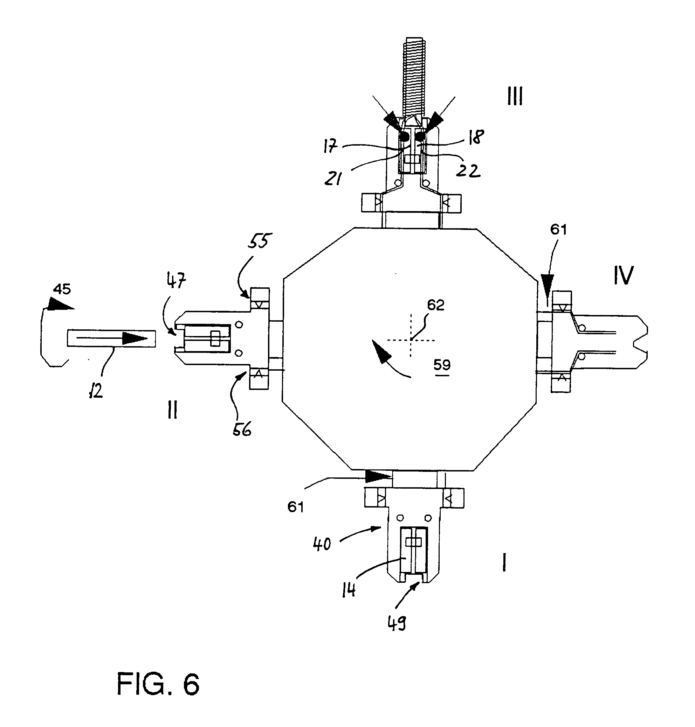

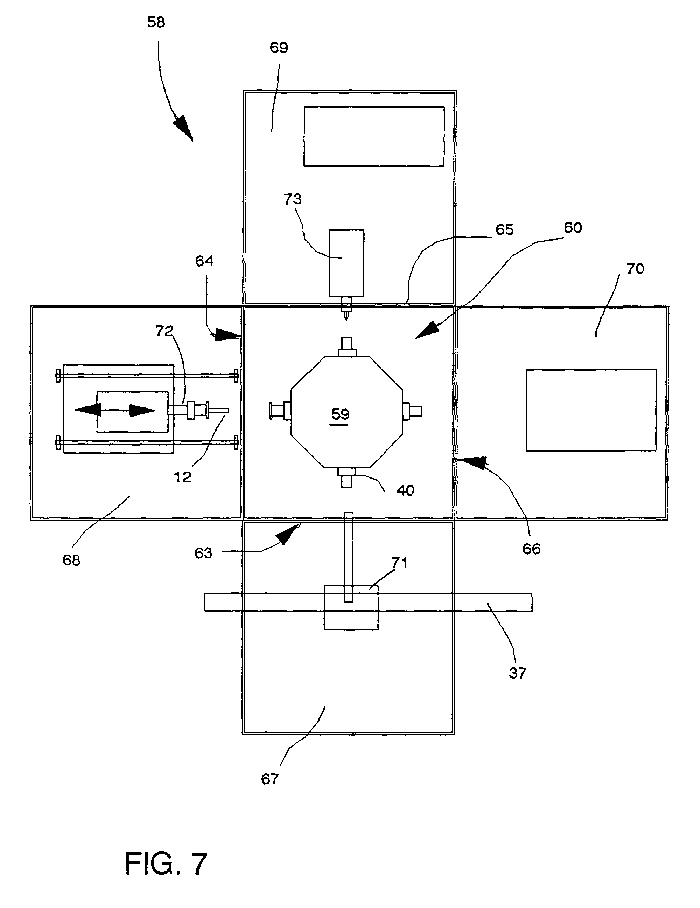

Zur Herstellung der in den **Fig. 1** und **2** dargestellten Transpondereinheit 11 wird eine Vorrichtung 58 verwendet, von der in **Fig. 6** lediglich ein Werkzeugträger 59 einer in **Fig. 7** dargestellten Basiseinheit 60 gezeigt ist.

**Fig. 6** zeigt den in dem hier dargestellten Ausführungsbeispiel mit vier Werkzeugaufnahmen 61 versehenen Werkzeugträger 59. Alle Werkzeugaufnahmen 61 sind bei diesem Ausführungsbeispiel mit dem in **Fig. 5** dargestellten Wickelwerkzeug 40 bestückt. **Fig. 6** dient im wesentlichen zur Darstellung der in unterschiedlichen Arbeitspositionen durchgeführten Verfahrensphasen zur Herstellung der in den **Fig. 1** und **2** dargestellten Transpondereinheit.

In der Arbeitsposition I befindet sich das Wickelwerkzeug 40 in einer Bestückungsposition, in der das Substrat 14 in die Substrataufnahme 49 des Wickelwerkzeugs 40 eingelegt wird. Durch eine Schwenkbewegung um eine Drehachse 62 des Werkzeugträgers 59 wird das Wickelwerkzeug 40 in die Arbeitsposition II verschwenkt, in der ein Einsetzen des Wicklungsträgers 12 in die Wicklungsträgeraufnahme 47 des Wickelwerkzeugs 40 und der unter Bezugnahme auf die **Fig. 5** beschriebene Wickelvorgang zur Herstellung der Wickelspule 13 erfolgt. In der Wickelposition erfolgt ein zusätzlicher Drehantrieb des Wickelwerkzeugs 40 um die Wickelachse 45. Nach Beendigung des Wickelvorgangs und Festlegung der Wickeldrahtenden 21, 22 in den Halteeinrichtungen 55, 56 sowie Durchtrennung des Wickeldrahts an den Halteeinrichtungen erfolgt ein Verschwenken in die Arbeitsposition III, in der die Verbindung der Wickeldrahtenden 21, 22 mit den Leiterbahnen 17, 18 des Substrats 14 erfolgt.

Schließlich wird das Wickelwerkzeug 40 in die Arbeitsposition IV verschwenkt, in der eine Entnahme der fertiggestellten Transpondereinheit 11 aus dem Wickelwerkzeug 40 erfolgt.

Aus **Fig. 7** wird der modulare Aufbau der Vorrichtung 58 besonders deutlich. Die mit dem Werkzeugträger 59 versehene Basiseinheit 60 ist mit einer Anzahl schnittstellenartig ausgebildeter Anschlußseiten 63, 64, 65, 66 versehen, an die eine entsprechende Anzahl von Vorrichtungsmodulen 67, 68, 69 und 70 mechanisch ankoppelbar sind. Bei dem hier dargestellten Ausführungsbeispiel sind insgesamt vier Vorrichtungsmodule, nämlich ein Bestückungsmodul 67, ein Wickelmodul 68, ein Verbindungsmodul 69 und ein Entnahmemodul 70 vorgesehen.

Das Bestückungsmodul 67 ist mit einer hier nicht näher dargestellten Zuführeinrichtung versehen, die eine kontinuierliche Zuführung des in **Fig. 3** dargestellten Substratträgers 37 zu einer Pick-and-Place-Einrichtung 71 ermöglicht, die für eine Vereinzelung des jeweiligen Substrats 14 aus dem Substratträger 37 sorgt und das Substrat 14 in das Wickelwerkzeug 40 einlegt.

Das Wickelmodul 68 besteht im wesentlichen aus einer mit einem Drehantrieb versehenen Wickelspindel 72, die im Falle des hier dargestellten Ausführungsbeispiels gleichzeitig zum Einsetzen des Wicklungsträgers 12 in das Wickelwerkzeug 40 dient. Dabei kann die Zuführung des Wicklungsträgers 12 bzw. die kontinuierliche Zuführung von Wicklungsträgern 12 zentral durch die als Hohlwelle ausgebildete Wickelspindel 72 erfolgen. Zur Übertragung des Drehantriebs der Wickelspindel 72 auf das Wickelwerkzeug 40 erfolgt eine drehmomentfeste Kopplung zwischen der Wickelspindel 72 und dem Wickelwerkzeug 40. Je nach Material des Wicklungsträgers 12 kann die Drehmomentkopplung direkt über diesen oder auch über ein separat vorgesehenes Koppelelement erfolgen. Zur translatorischen Bewegung der Wickelspindel 72 gegen das Wickelwerkzeug 40 ist die Wickelspindel auf einem Führungsschlitten 74 angeordnet.

Das Verbindungsmodul 69 weist einen Bondkopf 73 auf, der zur Verbindung der Wickeldrahtenden 21, 22 mit den Leiterbahnen 17 bzw. 18 des Substrats 14 gegen die Wickeldrahtenden 21, 22 bewegt wird.

Für das Entnahmemodul 70 kann eine hier nicht näher dargestellte Pick-and-Place-Einrichtung verwendet werden, die die fertiggestellte Transpondereinheit 11 aus dem Wickelwerkzeug 40 entnimmt und einer Ablage oder einer Weiterverarbeitung zuführt.

Die in **Fig. 7** dargestellte Basiseinheit 60 weist Anschlußseiten 63 bis 66 mit einem einheitlichen Rastermaß auf, so daß die Vorrichtungsmodule 67 bis 70 in beliebiger Weise umgruppiert werden können, falls die Ausbildung der jeweils herzustellenden Transpondereinheit dies erforderlich macht.

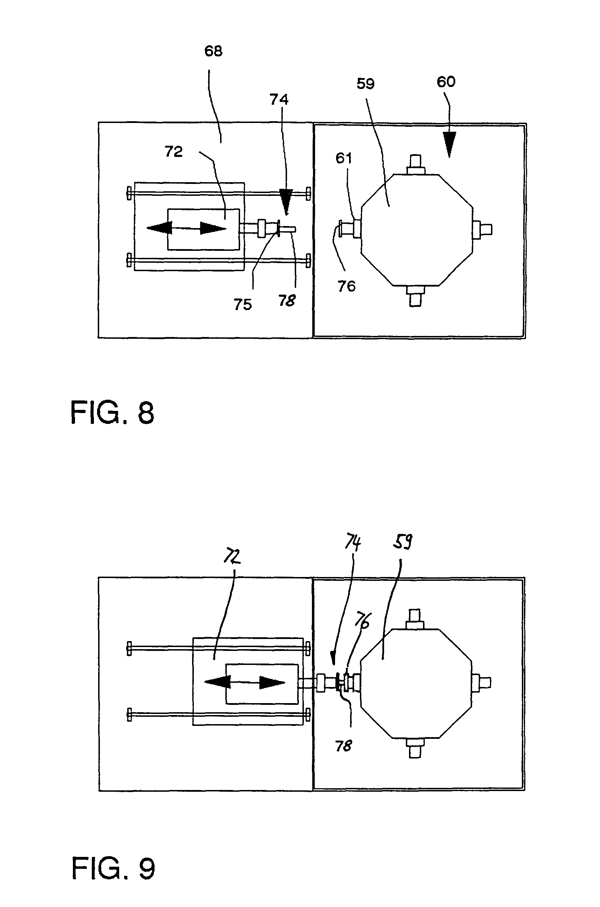

Die **Fig. 8** und **9** zeigen die Vorrichtung 58 in einer Grundkonfiguration aus einer Basiseinheit 60 und einem Wickelmodul 68. Bei dem in den **Fig. 8** und **9** dargestellten Ausführungsbeispiel ist ein im wesentlichen zweiteiliges Wickelwerkzeug 74 schematisch dargestellt mit zwei Matrizenteilen 75, 76, die einander zum Wickelwerkzeug 74 ergänzen. Dabei ist ein Matrizenteil 75 der Wickelspindel 72 und das andere Matrizenteil 76 der Werkzeugaufnahme 61 des Werkzeugträgers 59 zugeordnet. Das Matrizenteil 75 weist einen Wickelkern 77 auf, der zur Drehmomentübertragung in den Matrizenteil 75 eingreift **(Fig. 9).** Abweichend von dem in **Fig. 5** dargestellten Ausführungsbeispiel des Wickelwerkzeugs 40, bei dem der Wicklungsträger 12 auch als endloses Stangenmaterial durch die Wickelspindel 72 dem Wickelwerkzeug 40 zugeführt und erst nach Beendigung des Wickelvorgangs auf die in **Fig. 5** dargestellte Länge abgelängt werden kann, eignet sich das in den **Fig. 8** und **9** dargestellte Wickelwerkzeug 74 besonders zur Herstellung von ringförmigen Luftspulen.

## Patentansprüche

1. Verfahren zur Herstellung einer Transpondereinheit (11) mit einer Wickelspule (13) und mindestens einem elektronischen Bauelement (23, 24), wie ein Chip oder dergleichen, wobei das Bauelement (23, 24) unmittelbar oder über ein Substrat (14) mit der Wickelspule (13) verbunden ist, mit mehreren Verfahrensphasen, in denen eine Bestückung eines Wickelwerkzeugs (40) mit dem Bauelement bzw. dem Substrat (14), ein Wickeln der Wickelspule (13) im Wickelwerkzeug (40) und eine Verbindung von Wickeldrahtenden (21, 22) der Wickelspule (13) mit Anschlußflächen (17, 18) des Bauelements bzw. Substrats im Wickelwerkzeug (40) erfolgt,
**dadurch gekennzeichnet,**
**daß** das Wickelwerkzeug (40) beim Wickelvorgang mit einem im Wickelwerkzeug aufgenommenen Wicklungsträger (12) um eine gemeinsame Wickelachse (45) rotiert und in sämtlichen der genannten Verfahrensphasen als Arbeitsplattform dient.

2. Verfahren nach Anspruch 1,
**dadurch gekennzeichnet,**
**daß** das Wickelwerkzeug (40) getaktet in den einzelnen Verfahrensphasen zugeordnete Arbeitspositionen bewegt wird.

3. Verfahren nach Anspruch 1 oder 2,
**dadurch gekennzeichnet,**
**daß** die Bestückung des Wickelwerkzeugs (40) mit dem Bauelement oder Substrat (14) vor dem Wickeln der Wickelspule (13) erfolgt.

4. Verfahren nach Anspruch 1 oder 2,
**dadurch gekennzeichnet,**
**daß** das Wickeln der Wickelspule (13) vor der Bestückung des Wickelwerkzeugs (40) mit dem Bauelement oder Substrat (14) erfolgt.

5. Verfahren nach einem oder mehreren der vorangehenden Ansprüche,
**dadurch gekennzeichnet,**
**daß** das Wickelwerkzeug (40) auf einer Kreisbahn in die einzelnen Arbeitspositionen bewegt wird und längs der Kreisbahn angeordnete, den einzelnen Verfahrensphasen zugeordnete Funktionseinheiten (69, 70, 71, 72) auf das Wickelwerkzeug (40) translatorisch zubewegt wird.

6. Verfahren nach einem oder mehreren der vorangehenden Ansprüche,
**dadurch gekennzeichnet,**
**daß** in einer Bestückungsposition ein Bauelement oder Substrat (14) einer Zuführeinrichtung entnommen und am Wickelwerkzeug (40) plaziert wird.

7. Verfahren nach Anspruch 6,
**dadurch gekennzeichnet,**
**daß** das Bauelement oder Substrat (14) in der Zuführeinrichtung auf einem kontinuierlichen Bauelement- oder Substratträger (37) der Pick-and-Place-Einrichtung (71) zugeführt und nach Vereinzelung dem Träger (37) entnommen wird.

8. Verfahren nach einem oder mehreren der vorangehenden Ansprüche,
**dadurch gekennzeichnet,**
**daß** in einer Wickelposition ein mit einer Wickelspindel (72) verbundener Wicklungsträger (12) derart in das Wickelwerkzeug (40) eingesetzt wird, daß eine Verbindung zwischen dem Wicklungsträger (12) und dem Bauelement oder Substrat (14) erfolgt.

9. Verfahren nach Anspruch 8,
**dadurch gekennzeichnet,**
**daß** die Verbindung zwischen dem Wicklungsträger (12) und dem Substrat (14) über einen Klemmeingriff erfolgt.

10. Verfahren nach Anspruch 8 oder 9,
**dadurch gekennzeichnet,**
**daß** die Verbindung zwischen dem Wicklungsträger (12) und dem Bauelement oder Substrat (14) über eine Klebung gesichert wird.

11. Verfahren nach einem oder mehreren der vorangehenden Ansprüche,
**dadurch gekennzeichnet,**
**daß** die Drehmomentübertragung von der Wickelspindel (72) auf das Wickelwerkzeug (40) über den Wicklungsträger (12) erfolgt.

12. Verfahren nach einem oder mehreren der Ansprüche 1 bis 10,
**dadurch gekennzeichnet,**
**daß** die Drehmomentübertragung von der Wickelspindel (72) auf das Wickelwerkzeug (40) über ein vom Wicklungsträger (12) unabhängiges Kopplungselement erfolgt.

13. Vorrichtung zur Herstellung einer Transpondereinheit (11) mit einer Wickelspule (13) und mindestens einem elektronischen Bauelement (23, 24), wie ein Chip oder dergleichen, wobei das Bauelement (23, 24) unmittelbar oder über ein Substrat (14) mit der Wickelspule (13) verbunden ist, aufweisend eine Basiseinheit (60) mit einem um eine zentrale Drehachse (62) drehbaren Werkzeugträger (59), der mit mindestens einem Wickelwerkzeug (40) bestückbar ist, das auf einer Kreisbahn von einer einem Wickelmodul (68) zugeordneten Arbeitsposition (Wickelposition) in eine einem Verbindungsmodul (69) zugeordnete Arbeitsposition (Verbindungsposition) bewegbar ist, wobei das Wickelwerkzeug (40) in der Wickelposition als Träger einer Wickelmatrize und in der Verbindungsposition als Arbeitsplattform zur Herstellung der elektrisch leitfähigen Verbindung zwischen dem vom Wickelwerkzeug (40) aufgenommenen Bauelement (23, 24) und der Wickelspule (13) dient.

14. Vorrichtung nach Anspruch 13,
**dadurch gekennzeichnet,**
**daß** die Basiseinheit (60) Schnittstellen (63, 64, 65, 66) zur lösbaren Verbindung mit dem Wickelmodul (68) und dem Verbindungsmodul (69) aufweist.

15. Vorrichtung nach Anspruch 14,
**dadurch gekennzeichnet,**
**daß** die Basiseinheit (60) eine weitere Schnittstelle zur lösbaren Verbindung mit einem Bestückungsmodul (67) aufweist.

16. Vorrichtung nach Anspruch 14 oder 15,
**dadurch gekennzeichnet,**
**daß** die Basiseinheit (60) eine weitere Schnittstelle zur lösbaren Verbindung mit einem Entnahmemodul (70) aufweist.

17. Vorrichtung nach einem oder mehreren der Ansprüche 13 bis 16,
**dadurch gekennzeichnet,**
**daß** das Wickelmodul (68), das Verbindungsmodul (69), das Bestückungsmodul (67) und das Entnahmemodul (70) in der Reihenfolge ihrer Anordnung austauschbar sind.

18. Vorrichtung nach einem oder mehreren der Ansprüche 13 bis 17,
**dadurch gekennzeichnet,**
**daß** das Wickelmodul (68) eine translatorisch verschiebbare Wickelspindel (72) mit einer Kopplungseinrichtung zur Verbindung mit einem Wicklungsträger (12) aufweist.

19. Vorrichtung nach einem oder mehreren der Ansprüche 13 bis 18,
**dadurch gekennzeichnet,**
**daß** das Bestückungsmodul (67) eine Pick-and-Place-Einrichtung (71) aufweist, die mit einer Substrat-Zuführeinrichtung kombinierbar ist.

20. Vorrichtung nach einem oder mehreren der Ansprüche 13 bis 19,
**dadurch gekennzeichnet,**
**daß** die Basiseinheit (60) mehrere voneinander verschiedene Wickelwerkzeuge aufweist.

21. Transpondereinheit (11) mit einer Wickelspule (13) und mindestens einem elektronischen Bauelement (23, 24), wie ein Chip oder dergleichen, wobei das Bauelement (23, 24) auf einem Substrat (14) angeordnet und das Substrat (14) mit der Wickelspule (13) verbunden ist,
**dadurch gekennzeichnet,**
**daß** zur Verbindung des Substrats (14) mit der Wickelspule (13) eine Verbindung zwischen dem Substrat (14) und einem Wicklungsträger (12) der Wickelspule (13) vorgesehen ist.

22. Transpondereinheit nach Anspruch 21,
**dadurch gekennzeichnet,**
**daß** das Substrat (14) in einem Verbindungsteil (15) zur formschlüssigen Verbindung mit dem Wicklungsträger (12) vorzugsweise gabelförmig ausgebildet ist.

23. Transpondereinheit nach Anspruch 21 oder 22,
**dadurch gekennzeichnet,**
**daß** das Substrat (14) in einem Bestückungsteil doppelseitig bestückt ist, derart, daß eine isolierende Trägerschicht (31) des Substrats (14), die auf einer Seite mit Leiterbahnen (17, 18) versehen ist, Zugriffsöffnungen (32, 33) aufweist, die von der Gegenseite her eine rückseitige Kontaktierung der Leiterbahnen (17, 18) ermöglichen.

24. Transpondereinheit nach einem oder mehreren der Ansprüche 21 bis 23,
**dadurch gekennzeichnet,**
**daß** die Leiterbahnen (17, 18) auf ihrer Oberseite über eine Kontaktflächenkontaktierung mit einem ersten elektronischen Bauelement (23) und auf ihrer Gegenseite über eine Drahtkontaktierung (34, 35) mit einem weiteren elektronischen Bauelement (24) bestückt sind.

## Claims

1. A process for the production of a transponder unit (11) comprising a coil (13) and at least one electronic component (23, 24), such as a chip or the like, wherein the component (23, 24) is connected to the coil (13) directly or via a substrate (14), with a plurality of process phases in which the equipping of a winding tool (40) with the component or substrate (14), winding of the coil (13) in the winding tool (40), and connection of winding wire ends (21, 22) of the coil (13) to terminal surfaces (17, 18) of the component or substrate in the winding tool (40) are carried out, **characterised in that** in the winding process the winding tool (40) rotates about a common winding axis (45) with a winding carrier (12) accommodated in the winding tool and serves as operating platform in all of the aforementioned process phases.

2. A process according to Claim 1, **characterised in that** the winding tool (40) is moved in clocked fashion into operating positions assigned to the individual process phases.

3. A process according to Claim 1 or 2, **characterised in that** the equipping of the winding tool (40) with the component or substrate (14) takes place before the winding of the coil (13).

4. A process according to Claim 1 or 2, **characterised in that** the winding of the coil (13) takes place before the equipping of the winding tool (40) with the component or substrate (14).

5. A process according to one or more of the preceding claims, **characterised in that** the winding tool (40) is moved on a circular path into the individual operating positions and function units (69, 70, 71, 72) arranged along the circular path and assigned to the individual process phases are moved translationally towards the winding tool (40).

6. A process according to one or more of the preceding claims, **characterised in that** in an equipping position a component or substrate (14) is extracted from a feed device and placed on the winding tool (40).

7. A process according to Claim 6, **characterised in that** in the feed device the component or substrate (14) is fed on a continuous component- or substrate carrier (37) to the pick-and-place device (71) and after separation is extracted from the carrier (37).

8. A process according to one or more of the preceding claims, **characterised in that** in a winding position a winding carrier (12) connected to a winding spindle (72) is inserted into the winding tool (40) in such manner that a connection is established between the winding carrier (12) and the component or substrate (14).

9. A process according to Claim 8, **characterised in that** the connection between the winding carrier (12) and the substrate (14) takes place via a clamping engagement.

10. A process according to Claim 8 or 9, **characterised in that** the connection between the winding carrier (12) and the component or substrate (14) is secured via adhesion.

11. A process according to one or more of the preceding claims, **characterised in that** the torque transfer from the winding spindle (72) to the winding tool (40) takes place via the winding carrier (12).

12. A process according to one or more of Claims 1 to 10, **characterised in that** the torque transfer from the winding spindle (72) to the winding tool (40) takes place via a coupling element which is independent of the winding carrier (12).

13. A device for the production of a transponder unit (11) comprising a coil (13) and at least one electronic component (23, 24), such as a chip or the like, wherein the component (23, 24) is connected to the coil (13) directly or via a substrate (14), having a base unit (60) with a tool carrier (59) which is rotatable about a central axis of rotation (62) and which can be equipped with at least one winding tool (40) which can be moved on a circular path from an operating position assigned to a winding module (68) (winding position) into an operating position assigned to a connecting module (69) (connecting position), the winding tool (40) serving in the winding position as carrier of a winding matrix and serving in the connecting position as operating platform for the establishment of the electrically conductive connection between the component (23, 24) accommodated by the winding tool (40) and the coil (13).

14. A device according to Claim 13, **characterised in that** the base unit (60) comprises interfaces (63, 64, 65, 66) for detachable connection to the winding module (68) and the connecting module (69).

15. A device according to Claim 14, **characterised in that** the base unit (60) has a further interface for detachable connection to an equipping module (67).

16. A device according to Claim 14 or 15, **characterised in that** the base unit (60) has a further interface for detachable connection to an extracting module (70).

17. A device according to one or more of Claims 13 to 16, **characterised in that** the winding module (68), the connecting module (69), the equipping module (67) and the extracting module (70) are interchangeable in the sequence of their arrangement.

18. A device according to one or more of Claims 13 to 17, **characterised in that** the winding module (68) comprises a translationally moveable winding spindle (72) with a coupling device for connection to a winding carrier (12).

19. A device according to one or more of Claims 13 to 18, **characterised in that** the equipping module (67) comprises a pick-and-place device (71) which can be combined with a substrate feed device.

20. A device according to one or more of Claims 13 to 19, **characterised in that** the base unit (60) comprises a plurality of different winding tools.

21. A transponder unit (11) comprising a coil (13) and at least one electronic component (23, 24), such as a chip or the like, wherein the component (23, 24) is arranged on a substrate (14) and the substrate (14) is connected to the coil (13), **characterised in that** for the connection of the substrate (14) to the coil (13) a connection is provided between the substrate (14) and a winding carrier (12) of the coil (13).

22. A transponder unit according to Claim 21, **characterised in that** the substrate (14) is preferably designed to be fork-shaped in a connecting part (15) for interlocking connection with the winding carrier (12).

23. A transponder unit according to Claim 21 or 22, **characterised in that** in an equipping part the substrate (14) is equipped on both sides in such manner that an insulating carrier layer (31) of the substrate (14), provided on one side with conductor paths (17, 18), has access openings (32, 33) which allow rear-side contacting of the conductor paths (17, 18) from the opposite side.

24. A transponder unit according to one or more of Claims 21 to 23, **characterised in that** the conductor paths (17, 18) are equipped on their upper side with a first electronic component (23) via contact surface contacting and are equipped on their opposite side with a further electronic component (24) via wire contacting (34, 35).

## Revendications

1. Procédé pour fabriquer une unité de transpondeur (11) comportant une bobine d'enroulement (13) et au moins un composant électronique (23,24), tel qu'une plaquette ou analogue, le composant (23,24) étant relié directement ou par l'intermédiaire d'un substrat (14) à la bobine d'enroulement (13), ledit procédé comprenant plusieurs étapes, pendant lesquelles on équipe un outil d'enroulement (40) avec le composant ou le substrat (14), on exécute un enroulement de la bobine d'enroulement (13) dans l'outil d'enroulement (40) et on réalise la liaison des extrémités d'enroulement (21,22) de la bobine d'enroulement (13) avec des surfaces de raccordement (17,18) du composant ou du substrat dans l'outil d'enroulement (40), **caractérisé en ce que** l'outil d'enroulement (40) tourne, lors de l'opération d'enroulement, avec un support d'enroulement (12) logé dans l'outil d'enroulement, autour d'un axe d'enroulement commun (45), et est utilisé en tant que plate-forme de travail dans l'ensemble desdites étapes du procédé.

2. Procédé selon la revendication 1, **caractérisé en ce que** l'outil d'enroulement (40) est amené d'une manière cadencée dans les positions de travail associées aux différentes étapes du procédé.

3. Procédé selon la revendication 1 ou 2, **caractérisé en ce que** l'équipement de l'outil d'enroulement (40) avec le composant ou substrat (14) s'effectue avant l'enroulement de la bobine d'enroulement (13).

4. Procédé selon la revendication 1 ou 2, **caractérisé en ce que** l'enroulement de la bobine d'enroulement (13) s'effectue avant l'équipement de l'outil d'enroulement (40) avec le composant ou le substrat (14).

5. Procédé selon une ou plusieurs des revendications précédentes, **caractérisé en ce que** l'outil d'enroulement (40) se déplace sur une trajectoire circulaire pour venir dans les différentes positions de travail, et en ce que des unités fonctionnelles (69, 70, 71,72) qui sont disposées le long de la trajectoire circulaire et sont associées aux différentes étapes du procédé avancent en translation jusqu'à l'outil d'enroulement (40).

6. Procédé selon une ou plusieurs des revendications précédentes, **caractérisé en ce que** dans une position d'équipement, un composant ou un substrat (14) est prélevé d'un dispositif d'amenée et est placé dans l'outil d'enroulement (40).

7. Procédé selon la revendication 6, **caractérisé en ce que** le composant ou le substrat (14) est amené, dans le dispositif d'amenée, sur un porte-composant ou sur un porte-substrats continu (37) au dispositif de saisie et de mise en place (71) et est prélevé du support (37) après individualisation.

8. Procédé selon une ou plusieurs des revendications précédentes, **caractérisé en ce que**, dans une position d'enroulement, un support d'enroulement (12) relié à une broche d'enroulement (72) est inséré dans l'outil d'enroulement (40) de telle sorte qu'une liaison est établie entre le support d'enroulement (12) et le composant ou le substrat (14).

9. Procédé selon la revendication 8, **caractérisé en ce que** la liaison entre le support d'enroulement (12) et le substrat (14) est réalisée au moyen d'une action de serrage.

10. Procédé selon la revendication 8 ou 9, **caractérisé en ce que** la liaison entre le support d'enroulement (12) et le composant ou le substrat (14) est assurée par un collage.

11. Procédé selon une ou plusieurs des revendications précédentes, **caractérisé en ce que** la transmission de couple de la broche d'enroulement (72) à l'outil d'enroulement (40) s'effectue au moyen du support d'enroulement (12).

12. Procédé selon une ou plusieurs des revendications 1 à 10, **caractérisé en ce que** la transmission de couple de la broche d'enroulement (72) à l'outil d'enroulement (40) s'effectue au moyen d'un élément de couplage indépendant du support d'enroulement (12).

13. Dispositif pour fabriquer une unité de transpondeur (11) comportant une bobine d'enroulement (13) et au moins un composant électronique (23,24) tel qu'une plaquette ou analogue, le composant (23,24) étant relié directement ou par l'intermédiaire d'un substrat (14) à la bobine d'enroulement (13), et comportant une unité de base (60) possédant un porte-outil (59) qui peut tourner autour d'un axe central de rotation (62) et peut être équipé d'au moins un outil d'enroulement (40) qui peut être déplacé sur une trajectoire circulaire depuis une position de travail associée à un module d'enroulement(68)(position d'enroulement), jusque dans une position de travail associée à un module de liaison (69) (position de liaison), et dans lequel l'outil d'enroulement (40) est utilisé, dans la position d'enroulement, en tant que support d'une matrice d'enroulement et dans la position de liaison en tant que plate-forme de travail pour l'établissement de la liaison électriquement conductrice entre le composant (23,24) reçu par l'outil d'enroulement (40) et la bobine d'enroulement (13).

14. Dispositif selon la revendication 13, **caractérisé en ce que** l'unité de base (60) comporte des interfaces (63, 64, 65, 66) pour la liaison amovible avec le module d'enroulement (68) et le module de liaison (69).

15. Dispositif selon la revendication 14, **caractérisé en ce que** l'unité de base (60) comporte une autre interface pour la liaison amovible avec un module d'équipement (67).

16. Dispositif selon la revendication 14 ou 15, **caractérisé en ce que** l'unité de base (60) comporte une autre interface pour la liaison amovible avec un module de prélèvement (70).

17. Dispositif selon une ou plusieurs des revendications 13 à 16, **caractérisé en ce que** le module d'enroulement (68), le module de liaison (69), le module d'équipement (67) et le module de prélèvement (70) peuvent être remplacés selon la séquence de leur disposition.

18. Dispositif selon une ou plusieurs des revendications 13 à 17, **caractérisé en ce que** le module d'enroulement (68) comporte une broche d'enroulement (72) déplaçable en translation, comportant un dispositif de couplage pour la liaison avec un support d'enroulement (12).

19. Dispositif selon une ou plusieurs des revendications 13 à 18, **caractérisé en ce que** le module d'équipement (67) comporte un dispositif de saisie et de mise en place (71), qui peut être combiné à un dispositif d'amenée de substrat.

20. Dispositif selon une ou plusieurs des revendications 13 à 19, **caractérisé en ce que** l'unité de base (60) comporte plusieurs outils d'enroulement qui diffèrent les uns des autres.

21. Unité de transpondeur (11) comportant une bobine d'enroulement (13) et au moins un composant électronique (23,24) comme par exemple une plaquette ou analogue, le composant (23,24) étant disposé sur un substrat (14) et le substrat (14) étant relié à la bobine d'enroulement (13), **caractérisée en ce que** pour la liaison du substrat (14) avec la bobine d'enroulement (13) il est prévu une liaison entre le substrat (14) et un support d'enroulement (12) de la bobine d'enroulement (13).

22. Unité de transpondeur selon la revendication 21, **caractérisée en ce que** le substrat (14) est agencé de préférence en forme de fourche dans une partie de liaison (15) pour établir une liaison par formes complémentaires avec le support d'enroulement (12).

23. Unité de transpondeur selon la revendication 21 ou 22, **caractérisée en ce que** le substrat (14) est équipé sur ses deux faces, dans une unité d'équipement, de telle sorte qu'une couche de support isolante (31) du substrat (14), sur une face de laquelle sont disposées des voies conductrices (17,18), comporte des ouvertures d'accès (32,33), qui permettent l'établissement d'un contact arrière avec les voies conductrices (17,18), à partir de la face opposée.

24. Unité de transpondeur selon une ou plusieurs des revendications 21 à 23, **caractérisée en ce que** les voies conductrices (17,18) sont équipées, sur leur face supérieure, d'un premier composant électronique (23), au moyen de l'établissement d'un contact sur une surface de contact et sont équipées, sur leur face opposée, d'un autre composant électronique (24), au moyen de l'établissement d'un contact avec un fil (34,35).
